# EUROPÄISCHE PATENTSCHRIFT

(11) **EP 3 323 493 B1**
(45) Veröffentlichungstag und Bekanntmachung des Hinweises auf die Patenterteilung: **26.08.2020**
(21) Anmeldenummer: 17202953.0
(22) Anmeldetag: 22.11.2017
(51) Int. Cl.: B01D 46/00, B01D 46/02, F01N 3/06

(54) **MEHRSTUFIGE FILTERANLAGE UND VERFAHREN ZUM REINIGEN EINES LUFTSTROMS**
MULTI-STAGE FILTER ASSEMBLY AND METHOD FOR CLEANING AN AIR FLOW
INSTALLATION DE FILTRAGE À PLUSIEURS ÉTAPES ET PROCÉDÉ DE PURIFICATION D'UN FLUX D'AIR

(30) Priorität: 22.11.2016 DE 102016122440
(43) Veröffentlichungstag der Anmeldung: 23.05.2018
(73) Patentinhaber: Camfil APC GmbH, 78532 Tuttlingen (DE)
(72) Erfinder: Handte, Dr. Jakob, 78532 Tuttlingen (DE); Bisogni, Dominick, 78532 Tuttlingen (DE); Huckaby, Randilyne, 78532 Tuttlingen (DE); Listenbee, Ryan, 78532 Tuttlingen (DE); Simino, Adam, 78532 Tuttlingen (DE); Wells, Alex, 78532 Tuttlingen (DE); Vangilder, Daniel, 78532 Tuttlingen (DE)
(74) Vertreter: Winter, Brandl, Fürniss, Hübner, Röss, Kaiser, Polte - Partnerschaft mbB

(56) Entgegenhaltungen:
- EP-A1- 1 527 807
- EP-A1- 2 177 254
- EP-A1- 2 340 885
- DE-A1-102008 027 210
- DE-A1-102012 105 936

## Beschreibung

Die Erfindung betrifft eine Filteranlage/Filtersystem zum Reinigen eines Luftstromes welcher mit Partikeln und/oder gas-/dampfförmigen Stoffen insbesondere mit flüchtigen organischen Verbindungen, auch VOCs (volatile organic compounds) genannt, und Gerüche verunreinigt ist, sowie ein Luftstromreinigungsverfahren.

Aus dem Stand der Technik sind bereits Filter bekannt, die Geruchsstoffe und flüchtige organische Verbindungen an Additive anlagern lassen. Zum Beispiel offenbart die DE 20 2008 003542 U1 einen Filter mit einem chemisch-biologisch wirksamen autoregenerativen Filtermaterial, wobei auf und zwischen Zellulosefasern chemische Partikel, insbesondere Eisenhydroxid- und Aktivkohlestäube flächig aufgetragen bzw. räumlich eingetragen werden.

Benachbarter Stand der Technik ist auch aus den Druckschriften DE 10 2011 055 155 A1, DE 295 08 627 U1, DE 78 09 450 U1, DE10 2012 105 936 A1, US 4 854 949 A und US 2005 0 132 880 A1 bekannt.

Das pulverförmige Additiv wird bei allen Anlagen gemeinsam über einen Luftstrom gleichmäßig auf dem Filtermaterial verteilt. Das Additiv wird am Filtermaterial zurückgehalten und bildet einen Filterkuchen. Der mit gasförmigen Stoffen belastete Luftstrom durchströmt den Filterkuchen. Die Schadstoffe werden am Additiv angelagert. Sobald das Additiv mit Schadstoffen gesättigt ist, so dass die gewünschten Reingaskonzentrationen nicht mehr erreicht werden, muss dieses ausgetauscht werden. Hierfür wird der Filter über einen entgegengerichteten Luftstrom rückgespült und das Additiv abgereinigt. Das verbrauchte Additiv wird über einen Trichter aus der Filteranlage ausgeschleust und könnte aufbereitet werden. Aufbereitetes oder neues Additiv wird zur Ausbildung eines frischen Filterkuchens mit Hilfe eines Luftstroms auf den Filter aufgegeben.

Der Stand der Technik hat jedoch immer den Nachteil, dass bei einer direkten Aufgabe des Additivs auf das Filtermaterial dieses mit Feststoffen aus dem Abluftstrom verunreinigt wird und somit nur teilweise wiederaufbereitet werden kann.

Es gibt auch Anlagen, die so aufgebaut sind, dass sie in einer Stufe den Luftstrom von Staub und Schadstoffen befreien. Diese Anlagen sind aber äußerst kostspielig, sowohl in der Anschaffung als auch im Betrieb, da bei Verwendung von brennbaren Additiven große Aufwendungen für Explosions- und Brandschutzmaßnahmen getätigt werden müssen.

Beim Abreinigen des Additivs innerhalb der Filteranlage entsteht ein zündfähiges Gemisch, da die Konzentration an brennbarem pulverförmigen Additiv ein zündfähiges Gemisch bilden kann. Um eine Explosion zu verhindern, muss also der Eintrag von Zündquellen bei der Abreinigung verhindert werden. Dies wird meistens dadurch realisiert, dass die abzureinigenden Filter von dem Rohgasstrom abgeschottet werden, sogenannte Offline-Abreinigung, und so eine Zündquellenvermeidung gegeben ist. Durch die Abschottung des zu reinigenden Filters werden nachteiligerweise die Leistung der Filteranlage vermindert und erhebliche Anforderungen an Anlagensteuerung und Ausführung gestellt.

Alternativ werden Filteranlagen mit konstruktivem Explosionsschutz aufgebaut. Im Falle dass eine Explosion stattfindet, wird die Anlage so ausgeführt, dass der Schaden sich auf die Anlage reduziert und keine Gefahr für Leib und Leben besteht. Im Falle einer Explosion kommt es zwangsweise zu langen Instandsetzungszeiten und in Folge dessen zu einem Produktionsausfall. Entsprechend ist eine Explosionsvermeidung einer Schadensbegrenzung immer vorzuziehen.

Es ist also die Aufgabe der Erfindung, die Nachteile aus dem Stand der Technik zu vermeiden oder wenigstens zu mildern. Insbesondere soll eine Filteranlage offenbart werden, die eine Explosionsgefahr vollkommen ausschließt und gleichzeitig mit konstant hoher Leistung im Betrieb gehalten werden kann.

Diese Aufgabe wird bei einer gattungsgemäßen Vorrichtung erfindungsgemäß dadurch gelöst, dass eine Filteranlage zum Reinigen eines staub-, feststoff- und/oder schadstoff-beladenen Luftstroms/Aerosols, mit einem von dem Luftstrom zuerst durchströmten Primärfilter, der zum Abscheiden von Staub und/oder Feststoffen ausgelegt ist, einem dem Primärfilter nachgeschalteten Zündquellenverhinderer, etwa nach Art eines Funkenabscheiders und/oder einer Flammensperre, sowie einem dem Zündquellenverhinderer nachgelagerten Sekundärfilter, der zum Abscheiden von Schadstoffen, etwa nach Art von Geruchsstoffen oder flüchtigen organischen Verbindungen, unter Einsatz eines Additivs das vorbereitet ist, um Schadstoffe an sich zu binden, ausgelegt ist, wobei eine Additivzugabevorrichtung zwischen dem Zündquellenverhinderer und dem Sekundärfilter angeordnet ist. Das Additiv wird erst zugefügt, wenn die Staubkonzentration sehr/ausreichend gering ist und ein Funkeneintrag ausgeschlossen werden kann. So wird eine Explosion sicher verhindert.

Dies hat den Vorteil, dass eine relativ kostengünstige Filteranlage eingesetzt werden kann, da ohne brennbares Additiv der aufwendige Explosionsschutz entfallen kann. In der erfindungsgemäßen Filteranlage wird ein zündfähiges Gemisch in der zweiten Filterstufe zugelassen, aber durch die sichere Vermeidung eines Funkeneintrags ist trotzdem ein sicherer Betrieb gewährleistet. Außerdem wird durch die mehrstufige Filteranlage die Wartungshäufigkeit an dem Primär- und/oder an dem Sekundärfilter reduziert. Es wird nun also gezielt auf einen primären und sekundären Explosionsschutz gesetzt.

Vorteilhafte Ausführungsformen sind in den Unteransprüchen beansprucht und werden nachfolgend näher erläutert.

Vorzugsweise ist eine Additivaufbereitungseinheit an eine AdditivAusschleuseeinrichtung angeschlossen, um das Additiv zu recyceln/regenerieren. Dadurch dass das Additiv nicht durch Partikel (Staub) verunreinigt ist, kann es größtenteils wiederaufbereitet und in den Additivkreislauf wieder eingespeist werden. Dies ergibt eine Reduktion des Additivverbrauchs.

Für den Anreicherungsprozess von Schadstoffen am Additiv, welches den Filterkuchen bildet, ist es vorteilhaft, wenn der Filterkuchen mit dem gleichen Additiv mehrfach aufgebaut wird. Hierfür wird der Filterkuchen teilweise abgereinigt und das freiwerdende Additiv wird dem Rohgasstrom erneut zugeführt. Der Rohgasstrom/Luftstrom transportiert das Additiv erneut zum Filter an dem der Filterkuchen erneut aufgebaut wird. Der Additivverbrauch reduziert sich maßgeblich.

Ein günstiges Ausführungsbeispiel zeichnet sich dadurch aus, dass die Additivaufgabestelle einen Vorratsbehälter und eine nachgeschaltete Dosiereinrichtung besitzt. In dem Vorratsbehälter kann das Additiv/Adsorbens/der Hilfsstoff vorübergehend gelagert werden, bis es wieder dem Rohgas hinzugefügt wird. Die Hinzugabe des Additiv wird vorteilhafterweise über eine Dosiereinrichtung durchgeführt, damit nicht zu viel und auch nicht zu wenig Additiv in den Flugstrom gelangt.

Auch kann ein Ventilator vorhanden sein, der den Rohgasstrom ansaugt und durch den Primär- und den Sekundärfilter strömen lässt. Der Ventilator versetzt den Rohgasstrom in Bewegung und kann gezielt die Durchströmgeschwindigkeit in der Filteranlage steuern.

Der Primärfilter ist vorzugsweise als Trockenfilter auszuführen. Trockenfilter sind kostengünstig und einfach in der Handhabung. Außerdem lässt sich durch den Einsatz eines Trockenfilters die Partikelkonzentration durch Rückhalten am Filtermaterial auf kleiner 1 Milligramm je Kubikmeter Luft reduzieren. Dies wiederum hat den Vorteil, dass ein nachgeschaltenes Gewirk/Geflecht/Gestrick als Zündquellenverhinderer nicht verstopft.

Als Zündquellenverhinderer kann ein Metallfädenkonglomerat, Demister und/oder ein Keramikbett eingesetzt werden. Die Zündquellenverhinderer dienen als Funkenabscheider und Flammensperre und verhindern, dass es zu einer Explosion des zündfähigen Gemischs kommen kann.

Das Metallfädenkonglomerat ist vorzugsweise als Stahlgewirk ausgebildet. Ein Stahlgewirk ist auf ein spezielle Art und Weise aus Metallfäden gewebt, so dass ein Funkeneintrag besonders effektiv verhindert wird.

Auch ist es von Vorteil, wenn die Filteranlage zur Umgebung abgedichtet ist. Das ist besonders in dem Bereich der Filteranlage, in dem Additiv in dem Rohgasstrom enthalten ist, von Bedeutung, da dort aus Explosionsgefahr unbedingt vermieden werden muss, dass Staub und/oder Funken in den Strom gelangen können.

Es ist zweckhaft, wenn an den Primärfilter ein Staubreststoffbehälter angeschlossen ist, damit in diesem Staubreststoffbehälter die von dem Filterelement abgereinigten Staubpartikel gesammelt und entsorgt werden können.

Die Gesamtanlage wird vereinfacht aus einem Primärfilter zur Abscheidung von Staubpartikeln einer nachgeschalteten Sicherheitsstufe, um mögliche Zündquellen bei Fehlfunktion der Primärstufe zu blockieren, und einer letzten Adsorptionsstufe zur Abscheidung von gasförmigen Substanzen gebildet. Der Primärfilter kann als Standard-Trockenfilter ausgeführt werden. Die letzte Filterstufe kann als Kombination aus einfachem Trockenfilter und offen im Rohgasstrom geförderten Additiv ausgebildet werden.

Diese Aufgabe wird auch erfindungsgemäß durch ein Verfahren zum Reinigen eines Luftstroms gelöst, wobei aus einem Rohgas in einem mehrstufigen Filterverfahren ein Reingas gefiltert wird, wobei zuerst durch einen Primärfilter Staub und Feststoffe abgeschieden werden, dann durch einen dem Primärfilter nachgeschalteten Zündquellenverhinderer potentiell auftretende Funken und/oder Flammen abgeschieden werden und danach Schadstoffe durch einen dem Zündquellenverhinderer nachgeschalteten Sekundärfilter unter Einsatz eines Additivs, das vorbereitet ist, um die Schadstoffe an sich zu binden, abgesondert werden, wobei an einer Additivzugabevorrichtung zwischen dem Zündverhinderer und dem Sekundärfilter ein Additiv zugegeben wird, das im Sekundärfilter aus dem Luftstrom herausgefiltert wird. In Folge wird ein effektives kostengünstiges Verfahren aufgebaut.

Dies hat zum Vorteil, dass Explosionen besonders wirksam ausgeschlossen werden können bei gleichzeitig niedriger Kostenbelastung. Denn dadurch dass die Staubkonzentration des Luftstroms durch den Primärfilter so weit reduziert wird, dass der Luftstrom, dann enthaltend das Additiv, nicht explosionsfähig ist, und dass zusätzlich die Entzündung des Gemisches durch einen Funken- und Flammenverhinderung ausgeschlossen wird, wird also sowohl die Bildung einer explosionsfähigen Atmosphäre (primärer Explosionsschutz) als auch die Entzündung einer explosionsfähigen Atmosphäre (sekundärer Explosionsschutz) verhindert. Aufgrund der Schutzmaßnahmen und der gesicherten Zündquellenfreiheit besteht die Möglichkeit vor der letzten Filterstufe auch brennbare Additive direkt dem Rohgasstrom beizufügen. Neben der Adsorption im Filterkuchen werden somit auch schon ab der Additiv-Zuführungsstelle bis zum Filtermaterial im Flugstrom wirkungsvoll eingesetzt.

Bevorzugterweise wird vor dem Sekundärfilter ein Additiv dem staub- und funkenfreien Rohgas hinzugefügt, das vorbereitet ist, um die Schadstoffe an sich zu binden. Gasförmige Substanzen können nicht über gewöhnliche Filter mit Filtermaterial abgeschieden werden. Daher ist es notwendig, diese Schadstoffe vorher an einen herausfilterbaren Stoff zu binden.

Es ist zweckmäßig, wenn der Sekundärfilter das Additiv mit den gebundenen Schadstoffen aus dem Luftstrom herausfiltert und auf der Filteroberfläche einen Filterkuchen bildet, an dem die Schadstoffe beim Durchströmen abgeschieden werden. Da die gasförmigen Schadstoffe an das Additiv gebunden werden, können die Schadstoffe durch einen gewöhnlichen Filter, beispielsweise einen Trockenfilter, aus dem Rohgasstrom abgeschieden werden. An dem Sekundärfilter bleibt ein Filterkuchen zurück, der größtenteils aus dem Additiv mit den gebundenen Schadstoffen besteht.

Es ist vorteilhaft, wenn das Additiv direkt in das staub- und funkenfreie Rohgas hinzufügt wird, was vorteilhafterweise eine zusätzliche Leitung für das Additiv nicht mehr notwendig macht. Dadurch dass der Luftstrom nicht explosionsfähig ist, kann das Additiv unbedenklich also direkt in den Strom eingeleitet werden, ohne dass es zu einer Gefährdung führt.

Vorzugsweise kann das herausgefilterte Additiv aufbereitet und dem vorgefilterten und zündfunken- und flammenfreien Rohgas wieder hinzugefügt werden. Da in dem Filterkuchen des Sekundärfilters kein oder kaum Staub enthalten ist, kann das Additiv mit den gebundenen Schadstoffen einfacher recycelt werden, so dass es wiederverwendbar ist. Das wiederaufbereitete Additiv kann vorteilhafterweise wieder dem zündfunken-, flammen- und/oder staubfreien Rohgasstrom hinzugefügt werden, so dass insgesamt eine kleinere Menge des Additivs benötigt wird, was sich günstig auf die Kosten für den Betrieb der Filteranlage auswirkt.

Bevorzugterweise wird ein Ventilator zur Förderung des Rohgases eingesetzt.

Mit anderen Worten betrifft die Erfindung eine Filteranlage, bei der aus einem zu reinigenden Luftstrom in mehreren Filtern Staub, Partikel, Funken und Schadstoffe abgeschieden werden. Dabei wird in einer ersten Filterstufe durch einen Trockenfilter die Reingasstaubkonzentration auf unter 1 Milligramm pro Kubikmeter reduziert, in einer Zwischenstufe Funken und Flammen abgeschieden und in einer zweiten Filterstufe durch eine Kombination aus einer Flugstromadsorption und einer Adsorption über den Filterkuchen die restlichen, größtenteils gasförmigen (Schad-)Substanzen abgeschieden.

Die Erfindung wird nachfolgend mit Hilfe einer Zeichnung erläutert. Es zeigen:

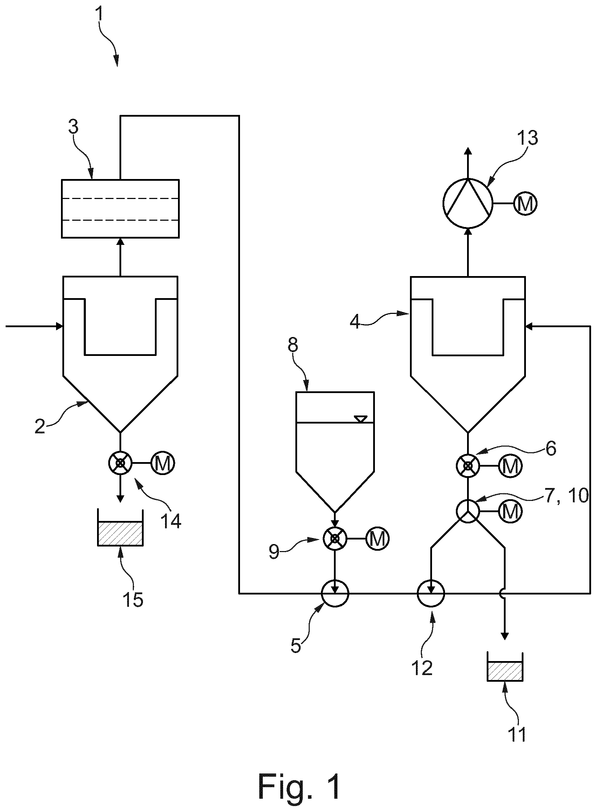

- Fig. 1: eine schematische Darstellung einer Filteranlage.

Die Figuren sind lediglich schematischer Natur und dienen ausschließlich dem Verständnis der Erfindung. Die gleichen Elemente sind mit denselben Bezugszeichen versehen. Die Merkmale der einzelnen Ausführungsbeispiele können untereinander ausgetauscht werden.

Figur 1 zeigt eine Filteranlage 1, die zum Reinigen eines staub-, feststoff- und/oder schadstoff-beladenen Luftstroms ausgelegt ist. Die Filteranlage 1 ist mehrstufig ausgebaut, wobei in der ersten Stufe ein Primärfilter 2 durchströmt wird, in einer Zwischenstufe ein Zündquellenverhinderer 3 eingesetzt ist und in der dritten Stufe ein Sekundärfilter 4 von dem Rohgasstrom durchströmt wird.

Der Luftstrom durchströmt zuerst den Primärfilter 2, der zum Abscheiden von Staub und/oder Feststoffen ausgelegt ist. Da der Luftstrom aber auch mit Schadstoffen, die nicht durch den Primärfilter 2 herausgefiltert werden können, da sie zumeist in Gasform vorliegen, belastet sind, wird dem staub- und/oder feststoffbereinigten Luftstrom ein Additiv hinzugefügt, das die Schadstoffe an sich bindet. Das Additiv wird über eine Additivzugabevorrichtung 5 in den Rohgasstrom eingeleitet. Diese Additivzugabevorrichtung 5 ist zwischen dem Zündquellenverhinderer 3 und dem Sekundärfilter 4 angeordnet. An dem Sekundärfilter 4 ist auch eine Additivausschleuseeinrichtung 6 angeschlossen. Diese Ausschleuseeinrichtung 6 recycelt mit Hilfe einer Additivaufbereitungseinheit 7 das Additiv und trennt die Schafstoffe ab.

Da der Luftstrom zuerst von Staub und Feststoffen gereinigt wird, ist es unbedenklich, ein Additiv dem staubfreien aber schadstoffbeladenen Luftstrom hinzuzufügen. Die Additivzugabevorrichtung 5 besitzt einen Vorratsbehälter 8, in dem das Additiv gelagert wird, und eine Dosierstation 9, die ausgelegt ist, um das Additiv in geeigneter Menge dem staub- und funkenfreien Luftstrom hinzuzufügen.

Das Additiv/Adsorbens/Hilfsstoff hat die Eigenschaft, dass es Schadstoffe aus dem Luftstrom an sich bindet. Diese Schadstoffe sind vor allem Geruchsstoffe oder flüchtige organische Verbindungen (VOC). An dem Sekundärfilter 4 wird das Additiv mit den gebundenen Schadstoffen über das Filtermaterial des Sekundärfilters 4 wieder aus dem Luftstrom abgeschieden. Dabei kann ein gewöhnlicher Trockenfilter verwendet werden. Durch diese Kombination einer Flugstromabsorption und einer Absorption über den Filterkuchen des Sekundärfilters 4 können also auch die gasförmigen Substanzen aus dem Rohgasstrom entfernt werden.

Da in dem Filterkuchen des Sekundärfilters 4 nur Additiv mit den gebundenen Schadstoffen abgeschieden werden, aber der Rohgasstrom schon zuvor durch den Primärfilter 2 von Staub befreit wurde, ist es möglich, das Additiv in der Additivausschleuseeinrichtung 6 abzuscheiden und wieder in der Additivaufbereitungseinheit 7 aufzubereiten. An einer Additivweiche 10 wird also das gereinigte Additiv von den nicht-recycelbaren Reststoffen getrennt. Die nicht mehr verwertbaren Reststoffe werden in einem Additivreststoffbehälter 11 gesammelt und entsorgt. Das wiederaufbereitete Additiv wird aber dem funkenfreien Rohgasstrom wieder zugeführt, indem es über eine Aufgabestelle 12 zur Rezirkulation wieder in den Additivkreislauf eingespeist wird. So wird also die Menge des Verbrauchs an Additiv erheblich verringert.

Ein Ventilator 13 ist an den Rohgasstrom angeschlossen und sorgt dafür, dass der Strom angesaugt wird. Dabei wird der Rohgasstrom zuerst in einem Up-Flow-Prinzip durch den Primärfilter geführt. Die abgeschiedenen Stoffe des Primärfilters 2, also der Staub und die Feststoffe, werden über einen Staubaustrag 14 innerhalb des Primärfilters 2 in einen Staubreststoffbehälter 15 abgeschieden und entsorgt.

Der staubfreie Luftstrom wird durch den Zündquellenverhinderer 3 von Funken und Flammen befreit. Der Zündquellenverhinderer 3 ist als Art Stahlgewirk oder Keramikbett ausgebildet. Alternativ zu einem Zündquellenverhinderer 3 kann auch eine Vorrichtung zwischengeschaltet werden, die überwacht, ob der Primärfilter 2 von Staub durchbrochen wird. Da nur ein Luftstrom, der eine Staubkonzentration von 10 bis 50 Gramm pro Mikrometer aufweist, explosionsfähig ist, kann auch so die Explosionsgefahr vermindert werden. Der Luftstrom, der den Primärfilter 2 verlässt, hat eine Staubkonzentration, die geringer als 1 Milligramm pro Kubikmeter ist, und ist somit nicht explosionsfähig. Wird jedoch der Primärfilter 2 durchbrochen, kann eine Explosion nicht ausgeschlossen werden. Deshalb ist als Zwischenstufe der Zündquellenverhinderer 3 in der Filteranlage angeordnet.

Die Figur 1 verdeutlich auch die Schritte eines Verfahrens zum Reinigen eines Luftstroms. Dabei wird aus einem Rohgas in einem mehrstufigen Filterverfahren ein Reingas gefiltert wird, wobei zuerst durch einen Primärfilter 2 Staub- und Feststoffe abgeschieden werden, dann durch einen den Primärfilter 2 nachgeschalteten Zündverquellenhinderer 3, der als Funken- oder Flammensperre ausgebildet ist, Funken und/oder Flammen abgeschieden werden und danach durch einen den Zündquellenverhinderer 3 nachgeschalteten Sekundärfilter 4 Schadstoffe, die über einen Additiv vorher gebunden werden, abgesondert werden.

### Bezugszeichenliste

- 1: Filteranlage
- 2: Primärfilter
- 3: Zündquellenverhinderer
- 4: Sekundärfilter
- 5: Additivzugabevorrichtung
- 6: Additivausschleuseeinrichtung
- 7: Additivaufbereitungseinheit
- 8: Vorratsbehälter
- 9: Dosierstation
- 10: Additivweiche
- 11: Additivreststoffbehälter
- 12: Additivaufgabestelle
- 13: Ventilator
- 14: Staubaustrag
- 15: Staubreststoffbehälter

## Patentansprüche

1. Filteranlage (1) zum Reinigen eines staub-, feststoff- und/oder schadstoff-beladenen Luftstroms, mit einem von dem Luftstrom zuerst durchströmten Primärfilter (2), der zum Abscheiden von Staub und/oder Feststoffen ausgelegt ist, einem dem Primärfilter (2) nachgeschalteten Zündquellenverhinderer (3), sowie einem dem Zündquellenverhinderer (3) nachgelagerten Sekundärfilter (4), der zum Abscheiden von Schadstoffen unter Einsatz eines Additivs, das vorbereitet ist, um die Schadstoffe an sich zu binden, ausgelegt ist,
**dadurch gekennzeichnet, dass** eine Additivzugabevorrichtung (5) zwischen dem Zündquellenverhinderer (3) und dem Sekundärfilter (4) angeordnet ist.

2. Filteranlage (1) nach Anspruch 1, **dadurch gekennzeichnet, dass** eine Additivausschleuseeinrichtung (6) an den Sekundärfilter (4) angeschlossen ist.

3. Filteranlage nach Anspruch 2, **dadurch gekennzeichnet, dass** eine Additivaufbereitungseinheit (7) an die Additivausschleuseeinrichtung (6) angeschlossen ist, um das Additiv zu recyceln.

4. Verfahren zum Reinigen eines Luftstromes, wobei aus einem Rohgas in einem mehrstufigen Filterverfahren ein Reingas gefiltert wird, wobei zuerst durch einen Primärfilter (2) Staub und Feststoffe abgeschieden werden, dann durch einen dem Primärfilter (2) nachgeschalteten Zündquellenverhinderer (3) potentiell auftretende Funken und/oder Flammen abgeschieden werden und danach Schadstoffe durch einen dem Zündquellenverhinderer (3) nachgeschalteten Sekundärfilter (4) unter Einsatz eines Additivs, das vorbereitet ist, um die Schadstoffe an sich zu binden, abgesondert werden, **dadurch gekennzeichnet, dass** an einer Additivzugabevorrichtung (5) zwischen dem Zündquellenverhinderer (3) und dem Sekundärfilter (4) ein Additiv zugegeben wird, das im Sekundärfilter (4) aus dem Luftstrom herausgefiltert wird.

5. Verfahren nach Anspruch 4, **dadurch gekennzeichnet, dass** vor dem Sekundärfilter (4) ein Additiv dem staub- und funkenfreien Rohgas hinzugefügt wird, das vorbereitet ist, um die Schadstoffe an sich zu binden.

6. Verfahren nach Anspruch 5, **dadurch gekennzeichnet, dass** der Sekundärfilter (4) das Additiv aus dem Luftstrom herausfiltert und auf der Filteroberfläche einen Filterkuchen bildet, an dem die Schadstoffe beim Durchströmen abgeschieden werden.

7. Verfahren nach Anspruch 6, **dadurch gekennzeichnet, dass** das Additiv direkt in das staub- und funkenfreie Rohgas hinzufügt wird.

8. Verfahren nach Anspruch 6 bis 7, **dadurch gekennzeichnet, dass** das herausgefilterte Additiv aufbereitet wird und dem vorgefilterten und zündfunken-und flammenfreien Rohgas wieder hinzugefügt wird.

9. Verfahren nach einem der vorherigen Ansprüche, **dadurch gekennzeichnet, dass** ein Ventilator (13) zum Ansaugen des Rohgases eingesetzt wird.

## Claims

1. Filter assembly (1) for cleaning an air flow loaded with dust, solids and/or harmful substances, having a primary filter (2), through which the air flow first flows, which is designed for the separating of dust and/or solids, an ignition source inhibitor (3) connected downstream of the primary filter (2) and a secondary filter (4) positioned downstream of the ignition source inhibitor (3) which is designed for the deposition of harmful substances by using an additive which is prepared to bind the harmful substances to itself,
**characterised in that** an additive feed device (5) is arranged between the ignition source inhibitor (3) and the secondary filter (4).

2. Filter assembly (1) according to claim 1, **characterised in that** an additive discharging device (6) is connected to the secondary filter (4)

3. Filter assembly according to claim 2, **characterised in that** an additive processing unit (7) is connected to the additive discharging device (6) in order to recycle the additive.

4. Method for cleaning an airflow, wherein a pure gas is filtered out of a raw gas in a multistage filtering method, wherein first dust and solids are separated by a primary filter (2), then potentially occurring sparks and/or flames are separated by an ignition source inhibitor (3) connected downstream of the primary filter (2) and thereafter harmful substances are separated out by a secondary filter (4) connected downstream from the ignition source inhibitor (3) by using an additive which is prepared to bind the harmful substances to itself, **characterised in that** at an additive feed device (5) between the ignition source inhibitor (3) and the secondary filter (4) is added an additive which is filtered out of the airflow in the secondary filter (4).

5. Method according to claim 4, **characterised in that** prior to the secondary filter (4) an additive is added to the dust-free and spark-free raw gas, which is prepared to bind the harmful substances to itself.

6. Method according to claim 5, **characterised in that** the secondary filter (4) filters the additive out of the airflow and forms on the filter surface a filter cake on which the harmful substances are deposited while flowing through.

7. Method according to claim 6, **characterised in that** the additive is added directly into the dust-free and spark-free raw gas.

8. Method according to claims 6 to 7, **characterised in that** the additive which has been filtered out is processed and added again to the pre-filtered and ignition-spark-free and flame-free raw gas.

9. Method according to any of the preceding claims, **characterised in that** a ventilator (13) is used for suctioning the raw gas.

## Revendications

1. Installation de filtration (1) permettant la purification d'un flux d'air chargé de poussières, matières solides et/ou polluants, avec un filtre primaire (2), traversé en premier lieu par le flux d'air, qui est conçu pour séparer la poussière et/ou les matières solides, un inhibiteur de source d'inflammation (3) monté en aval du filtre primaire (2), ainsi qu'un filtre secondaire (4) situé en aval de l'inhibiteur de source d'inflammation (3), qui est conçu pour séparer les polluants à l'aide d'un additif, qui est préparé à fixer les polluants à lui-même,
**caractérisée en ce qu'**un dispositif d'ajout d'additif (5) est disposé entre l'inhibiteur de source d'inflammation (3) et le filtre secondaire (4).

2. Installation de filtration (1) selon la revendication 1, **caractérisée en ce qu'**un appareil d'évacuation d'additif (6) est raccordé au filtre secondaire (4).

3. Installation de filtration (1) selon la revendication 2, **caractérisée en ce qu'**une unité de traitement d'additif (7) est raccordée à l'appareil d'évacuation d'additif (6), afin de recycler l'additif.

4. Procédé pour nettoyer un flux d'air, dans lequel un air purifié est filtré à partir d'un gaz brut au cours d'un procédé de filtration en plusieurs étapes, dans lequel la poussière et les matières solides sont en premier lieu séparées à travers un filtre primaire (2), puis des étincelles et/ou flammes survenant potentiellement sont séparées par un inhibiteur de source d'inflammation (3) monté en aval du filtre primaire (2) et ensuite les polluants sont séparés par un filtre secondaire (4) monté en aval de l'inhibiteur de source d'inflammation (3) à l'aide d'un additif, qui est préparé pour fixer les polluants, **caractérisé en ce qu'**au niveau d'un dispositif d'ajout d'additif (5) entre l'inhibiteur de source d'inflammation (3) et le filtre secondaire (4), un additif, qui est filtré du flux d'air dans le filtre secondaire (4), est ajouté.

5. Procédé selon la revendication 4, **caractérisé en ce que** devant le filtre secondaire (4), un additif, qui est préparé pour fixer les polluants, est ajouté au gaz brut exempt de poussière et d'étincelles.

6. Procédé selon la revendication 5, **caractérisé en ce que** le filtre secondaire (4) filtre l'additif du flux d'air et forme sur la surface de filtration un gâteau de filtration sur lequel les polluants sont séparés lors de leur passage.

7. Procédé selon la revendication 6, **caractérisé en ce que** l'additif est ajouté directement dans le gaz brut exempt de poussières et d'étincelles.

8. Procédé selon la revendication 6 à 7, **caractérisé en ce que** l'additif filtré est traité et à nouveau ajouté au gaz brut préfiltré et exempt d'étincelles d'allumage et de flammes.

9. Procédé selon l'une quelconque des revendications précédentes, **caractérisé en ce qu'un** ventilateur (13) est utilisé pour aspirer le gaz brut.
